(19) Europäisches Patentamt
European Patent Office
Office européen des brevets

(11) **EP 3 521 062 B1**

(12) **EUROPEAN PATENT SPECIFICATION**

(45) Date of publication and mention
of the grant of the patent:
**14.07.2021 Bulletin 2021/28**

(21) Application number: **17856178.3**

(22) Date of filing: **27.09.2017**

(51) Int Cl.:
**B60C 11/03** *(2006.01)*          **B60C 11/13** *(2006.01)*
**B60C 11/00** *(2006.01)*

(86) International application number:
**PCT/JP2017/034867**

(87) International publication number:
**WO 2018/062229 (05.04.2018 Gazette 2018/14)**

(54) **TIRE TREAD AND TIRE HAVING THIS TREAD**

REIFENLAUFFLÄCHE UND REIFEN MIT DIESER LAUFFLÄCHE

BANDE DE ROULEMENT DE PNEU ET PNEU COMPORTANT CETTE BANDE DE ROULEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.09.2016 PCT/JP2016/078461**

(43) Date of publication of application:
**07.08.2019 Bulletin 2019/32**

(73) Proprietor: **Compagnie Générale des
Etablissements Michelin
63000 Clermont-Ferrand (FR)**

(72) Inventors:
• **UCHIDA, Tomotake
  Tokyo 163-1073 (JP)**
• **MAESAKA, Masayuki
  Tokyo 163-1073 (JP)**

(74) Representative: **Regimbeau
20, rue de Chazelles
75847 Paris Cedex 17 (FR)**

(56) References cited:
JP-A- H1 178 428          JP-A- 2006 076 529
JP-A- 2007 283 813          JP-A- 2012 040 937
JP-A- 2012 116 371          JP-A- 2013 091 480
JP-A- 2013 203 077          JP-A- 2016 117 393

EP 3 521 062 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical field

The present invention relates to a tire tread and a tire having said tread, and in particular relates to a tire tread and a tire having said tread with which it is possible for a higher level of performance on both normal road surfaces and winter road surfaces to be achieved and exhibited simultaneously by changing the direction of rotation of the tire.

### Background art

When traveling on a winter road surface such as a snow-covered road or a frozen road surface, safety when traveling on the winter road surface is typically ensured by employing tires adapted for travel on winter road surfaces, such as studless tires in which the tire itself has an anti-slip effect, in place of normal so-called summer tires.

Owning two sets of tires, namely studless tires and summer tires, increases the burden on the user in terms of the need to secure a storage location and the need to prepare wheels for the studless tires, for example.

It is known to install chains on summer tires as a means for ensuring safety when traveling on winter road surfaces. It is also known to use studless tires throughout the year.

In addition, a tire has also been proposed in which the tread pattern is arranged asymmetrically in the direction of rotation, and performance adapted to the season is exhibited in accordance with the direction of rotation (patent literature article 1).
Further, a tire has also been proposed in which different rubber from that in a trailing side edge portion of a block is disposed in a leading side edge portion thereof, and the trailing side edge portion is formed with an arcuate surface (patent literature article 2). Other examples of tire treads are disclosed in JP 2007 283813 A, JP H11 78428 A, JP 2012 040937 A, JP 2013 203077 A and JP 2013 091480 A.

### Prior art literature

### Patent literature

Patent literature article 1: International Publication No. 2014/099471
Patent literature article 2: Japanese Unexamined Patent Publication 1999-078428

### Problems to be resolved by the invention

However, installing chains on summer tires is problematic in that ease of installation, durability, comfort and ensuring safety when chains are installed are insufficient in comparison with studless tires, and studless tires are not suitable for use throughout the year since the performance thereof on normal road surfaces that are not winter road surfaces is typically insufficient compared with that of summer tires.

Further, the tires disclosed in patent literature article 1 and patent literature article 2 do not achieve optimal performance on both normal road surfaces and winter road surfaces simultaneously, and from the viewpoint of safety when traveling, there is a demand for tires capable of achieving a higher level of performance on both normal road surfaces and winter road surfaces simultaneously.

The present invention has been devised to resolve the problems in the prior art discussed hereinabove, and the objective thereof is to provide a tire tread and a tire having said tread with which it is possible for a higher level of performance on both normal road surfaces and winter road surfaces to be exhibited simultaneously by changing the direction of rotation of the tire.

### Means of overcoming the problems

In this specification, "radial direction" means a direction perpendicular to an axis of rotation of a tire, being a direction corresponding to a thickness direction of a tread.

Further, "axial direction" means a direction parallel to a line through the axis of rotation of the tire.

Further, "circumferential direction" means a direction touching an arbitrarily defined circle centered at the axis of rotation. The "circumferential direction" is perpendicular to both the "axial direction" and the "radial direction".

Further, "tire" means any form of resilient tire, irrespective of whether or not the tire is subjected to internal pressure.

Further, "tread" means a certain amount of a rubber material demarcated by a side surface and two primary surfaces, where one of the two primary surfaces comes into contact with a road surface when the tire rolls.

Further, "tread surface" (also referred to as "footprint" or "contact patch") means a surface formed by a part of the tire tread that comes into contact with the road surface when the tire rolls.

Further, "groove" means a space demarcated by two rubber surfaces/side surfaces that do not come into contact under normal usage conditions and another rubber surface/bottom surface connecting the two rubber surfaces/side surfaces. A "groove" has a width and a depth.

Further, "main groove" refers to a groove that is relatively wide, among various grooves formed in the tread, and that is predominantly responsible for draining fluids. In many cases, main groove means a groove which extends in the circumferential direction of the tire in a linear, zig-zag or undulating fashion, but relatively wide groves which extend at an angle to the direction of rotation of the tire and are predominantly responsible for draining fluids are also included. Further, grooves other than the "main groove" are referred to as "auxiliary grooves".

Further, "incision" (also referred to as "sipe") means a thin incision formed in a radially inward direction from the surface of the tread by means of a thin blade having a shape such as that of a knife blade. The width of the "incision" at the tread surface is less than the groove width, for example at most equal to 2.0 mm. Unlike "grooves", "incisions" may be partially closed when in contact with the road surface, with the surface of the tread as a ground-contacting surface.

Further, "edge" means an intersecting portion of an upper surface and a front surface or a side surface of a block (the edge portions of the upper surface of the block, or a boundary portion with the front surface or the side surface, on the upper surface of the block).

Further, "leading edge" means an intersecting portion (edge) of the upper surface and the front surface of a block that comes into contact with the road surface before other edges during rotation, and the intersecting portion (edge) of the upper surface and the front surface of the block on the opposite side, in the direction of rotation, of the same block as the "leading edge" is referred to as the "trailing edge".

Further, the "dynamic shear complex modulus G*" refers to the dynamic shear complex modulus (dynamic shear modulus: G*) of a material at 0°C. The storage elastic modulus represented by G' and the loss elastic modulus represented by G", which are well known dynamic properties for persons skilled in the art, are measured by means of a viscosity analyzer (viscoanalyzer: Metravib VB4000) using a test piece molded from the raw composition or a test piece which is combined with the composition after vulcanization. The test piece that is used is one that is described in Figure X2.1 (a circular method) of the standard ASTM D 5992-96 (version published September 2006, initially approved in 1996). The diameter "d" of the test piece is 10 mm (consequently the test piece has a circular cross section of 78.5 mm$^2$), the thickness "L" of each part of the rubber compound is 2 mm, and the ratio "d/L" (described in paragraph X2.4 of the ASTM standard, in contrast to the ratio "d/L" of 2 recommended in the standard ISO 2856) is 5. In the test, the response of a test piece comprising a vulcanized rubber composition subjected to a simple alternating sinusoidal shear load is recorded at a frequency of 10 Hz. The maximum shear stress imposed during the test is 0.34 MPa. The test is conducted by varying the temperature from Tmin, which is a temperature lower than the glass transition temperature (Tg) of the rubber material, to a maximum temperature Tmax, in the vicinity of 100°C, at a rate of 1.5°C per minute. The test piece is stabilized for approximately 20 minutes at Tmin prior to the start of the test in order to obtain a satisfactory uniformity of temperature within the test piece. The results obtained are the storage elastic modulus (G') and the loss elastic modulus (G") at the prescribed temperature. The dynamic shear complex modulus G* is defined in terms of the absolute values of the storage elastic modulus and the loss elastic modulus using the following formula:

[Formula 1]

$$G^* = \sqrt{G'^2 + G''^2}$$

In order to achieve the objective described hereinabove, the present invention provides a tire tread including a ground-contacting surface which comes into contact with a road surface during rolling, at least one circumferential groove which has a depth Dc and extends in a circumferential direction of a tire, a plurality of auxiliary grooves which have a depth Da and extend in a direction intersecting the circumferential groove, and a plurality of blocks defined by the circumferential groove and the auxiliary grooves, wherein each block includes an upper surface forming part of the ground-contacting surface, and at least two front surfaces which are separated by a length L in the circumferential direction of the tire and each face different auxiliary grooves, and the upper surface forms at least two edges at intersecting portions with the front surfaces, namely a first edge serving as a trailing edge when traveling in a first direction DR1, and a second edge serving as the trailing edge when traveling in a second direction DR2 opposite to the first direction DR1, wherein each block is composed of at least two rubber layers that overlap in the circumferential direction of the tire, wherein the at least two rubber layers comprise a first rubber layer which includes at least part of the first edge and is composed of a first rubber composition, and a second rubber layer which includes at least part of the second edge and is composed of a second rubber composition different from the first rubber composition, wherein the first rubber layer is exposed in a region of at least 20% of the upper surface toward the inside of the block from the first edge, and a region of at least 60% of the front surface in a radially inward direction from the first edge, wherein the first rubber layer occupies at least 20% and at most 80% of the volume of the block, and wherein a glass transition temperature Tg of the first rubber composition forming the first rubber layer is at most equal to -20°C, and the glass transition temperature Tg of the second rubber composition forming the second rubber layer is greater than -20°C.

In the invention configured as described hereinabove, at least two edges are formed at intersecting portions between the upper surface and the front surfaces of the block, namely a first edge serving as a trailing edge when traveling in a first direction DR1, and a second edge serving as the trailing edge when traveling in a second direction DR2 opposite to the first direction DR1, each block is composed of at least two rubber layers that overlap in the circumferential direction of the tire, comprising a first rubber layer which includes at least part of the first edge and is composed of a first rubber composition, and a second rubber layer which includes at least part of the second edge and is composed of a second rubber composition different from the first rubber composition, and the first rubber layer is exposed in a region of at least 20% of the upper surface toward the inside of the block from the first edge and a region of at least 60% of the front surface in a radially inward direction from the first edge, and therefore two different performances can be achieved simultaneously at a high level using one tire, by changing the direction of rotation of the tire.

Furthermore, in the present invention, since the glass transition temperature Tg of the first rubber composition forming the first rubber layer is at most equal to -20°C, and the glass transition temperature Tg of the second rubber composition forming the second rubber layer is greater than -20°C, the block deforms significantly as a result of forces during breaking, which is of particular importance with regard to safety while traveling, the trailing edge side performance becomes dominant and the leading edge side is barely in contact with the ground. Both winter performance and performance on normal road surfaces can thus be achieved simultaneously at a high level, since, with regard to winter performance, when traveling in the first direction DR1 in which the first edge, at least part of which is formed from the first rubber layer, serves as the trailing edge, the first rubber composition, having a glass transition temperature Tg at most equal to -20°C and constituting the first rubber layer, is capable of flexibly tracking winter road surfaces covered with snow or ice, and with regard to performance on normal road surfaces, when traveling in the second direction DR2 in which the second edge, at least part of which is formed from the second rubber layer, serves as the trailing edge, the second rubber composition, having a glass transition temperature Tg greater than -20°C and constituting the second rubber layer, is capable of accepting a large force from a normal road surface.

Furthermore, in the present invention, the first rubber layer occupies at least 20% and at most 80% of the volume of the block, and it is therefore possible to achieve simultaneously, more reliably and at a high level, both performance and winter performance when traveling in the first direction DR1 in which the first edge, at least part of which is formed from the first rubber layer, serves as the trailing edge, and performance on normal road surfaces when traveling in the second direction DR2 in which the second edge, at least part of which is formed from the second rubber layer, serves as the trailing edge. That is, if the volume of the block occupied by the first rubber layer is less than 20%, it is difficult for the first rubber layer to allow the block to deform sufficiently for the performance thereof to be exhibited, and there is a risk that an improvement in the performance on winter road surfaces may be difficult to achieve. Meanwhile, if the volume of the block occupied by the first rubber layer is greater than 80%, it is difficult for the second rubber layer to accept a large force from a normal road surface, and there is a risk that an improvement in the performance on normal road surfaces may be difficult to achieve.

It should be noted that the volume of the block occupied by the first rubber layer is more preferably at least equal to 25% and at most equal to 75%, and yet more preferably at least equal to 30% and at most equal to 70%.

In the present invention, the dynamic shear complex modulus G* at 0°C and 0.34 MPa of the first rubber composition forming the first rubber layer is preferably at most equal to 2.0 MPa, and the dynamic shear complex modulus G* at 0°C and 0.34 MPa of the second rubber composition forming the second rubber layer is preferably at least equal to 2.5 MPa.

With an embodiment configured in this way, it is possible to achieve simultaneously, more reliably and at a high level, both winter performance when traveling in the first direction DR1 in which the first edge, at least part of which is formed from the first rubber layer, serves as the trailing edge, and performance on normal road surfaces when traveling in the second direction DR2 in which the second edge, at least part of which is formed from the second rubber layer, serves as the trailing edge. That is, if the dynamic shear complex modulus G* at 0°C and 0.34 MPa of the first rubber composition forming the first rubber layer is greater than 2.0 MPa, it is difficult for the first rubber composition constituting the first rubber layer to flexibly track winter road surfaces covered with snow or ice, and there is a risk that an improvement in the performance on winter road surfaces may be difficult to achieve. Further, if the dynamic shear complex modulus G* at 0°C and 0.34 MPa of the second rubber composition forming the second rubber layer is less than 2.5 MPa, it is difficult for the second rubber composition constituting the second rubber layer to accept a large force from a normal road surface, and there is a risk that an improvement in the performance on normal road surfaces may be difficult to achieve.

It should be noted that the dynamic shear complex modulus G* at 0°C and 0.34 MPa of the first rubber composition forming the first rubber layer is more preferably at most equal to 1.8 MPa.

In the present invention, the difference between the dynamic shear complex modulus G* at 0°C and 0.34 MPa of the first rubber composition forming the first rubber layer and the dynamic shear complex modulus G* at 0°C and 0.34 MPa of the second rubber composition forming the second rubber layer is preferably at least equal to 0.8 MPa.

With an embodiment configured in this way, it is possible to achieve simultaneously, more reliably and at a high level, both winter performance when traveling in the first direction DR1 in which the first edge, at least part of which is formed from the first rubber layer, serves as the trailing edge, and performance on normal road surfaces when traveling in the second direction DR2 in which the second edge, at least part of which is formed from the second rubber layer, serves as the trailing edge. That is, if the difference between the dynamic shear complex modulus G* at 0°C and 0.34 MPa of the first rubber composition forming the first rubber layer and the dynamic shear complex modulus G* at 0°C and 0.34 MPa of the second rubber composition forming the second rubber layer is less than 0.8 MPa, there is not a sufficient performance difference between winter performance exhibited when traveling in the first direction DR1 in which the first edge, at least part of which is formed from the first rubber layer, serves as the trailing edge, and performance on normal road surfaces exhibited when traveling in the second direction DR2 in which the second edge, at least part of which is formed from the second rubber layer, serves as the trailing edge, and there is a risk that it may be difficult for both performance on normal road surfaces and performance on winter road surfaces to be achieved simultaneously at a higher level.

It should be noted that the difference between the dynamic shear complex modulus G* at 0°C and 0.34 MPa of the first rubber composition forming the first rubber layer and the dynamic shear complex modulus G* at 0°C and 0.34 MPa of the second rubber composition forming the second rubber layer is more preferably at least equal to 1.0 MPa, and yet more preferably at least equal to 1.2 MPa.

In the present invention, the first rubber layer preferably constitutes at least 80% of the first edge.

With an embodiment configured in this way, winter performance when traveling in the first direction DR1 in which the first edge, at least part of which is formed from the first rubber layer, serves as the trailing edge, can be improved more reliably. That is, if the first rubber layer constituting the first edge is less than 80%, the performance of the first rubber layer cannot be exhibited adequately, and there is a risk that it may be difficult to achieve an improvement in the winter performance exhibited when traveling in the first direction DR1 in which the first edge, at least part of which is formed from the first rubber layer, serves as the trailing edge.

It should be noted that the first rubber layer more preferably constitutes at least 90% of the first edge, and the first rubber layer yet more preferably constitutes the entire first edge.

In the present invention, the first rubber layer is preferably exposed in the upper surface of the block in a region of up to 75% thereof from the first edge.

With an embodiment configured in this way, it is possible to achieve simultaneously, more reliably and at a high level, both winter performance when traveling in the first direction DR1 in which the first edge, at least part of which is formed from the first rubber layer, serves as the trailing edge, and performance on normal road surfaces when traveling in the second direction DR2 in which the second edge, at least part of which is formed from the second rubber layer, serves as the trailing edge. That is, if the first rubber layer is exposed in the upper surface of the block in a region thereof exceeding 75% from the first edge, then since the relative amount of the second rubber layer exposed in the upper surface of the block is reduced, there is a risk that it may be difficult to improve the performance on normal road surfaces.

It should be noted that the exposure of the first rubber layer in the upper surface of the block more preferably occurs in a region of up to 70% from the first edge, and yet more preferably in a region of up to 60% from the first edge.

In the present invention, the first rubber layer is preferably exposed in the entire front surface forming the first edge of the block.

With an embodiment configured in this way, winter performance when traveling in the first direction DR1 in which the first edge, at least part of which is formed from the first rubber layer, serves as the trailing edge, can be improved more reliably.

In the present invention, the block preferably has at least one incision opening at least in the upper surface.

With an embodiment configured in this way, since it is easy to optimize the rigidity of the block by means of the thin incisions, it is consequently possible to reliably adjust block collapse required to exhibit winter performance when traveling in the first direction DR1 in which the first edge, at least part of which is formed from the first rubber layer, serves as the trailing edge, and the block rigidity required to accept a large force from a normal road surface when traveling in the second direction DR2 in which the second edge, at least part of which is formed from the second rubber layer, serves as the trailing edge, and it is therefore possible to achieve simultaneously, more reliably and at a high level, both winter performance when traveling in the first direction DR1 in which the first edge, at least part of which is formed from the first rubber layer, serves as the trailing edge, and performance on normal road surfaces when traveling in the second direction DR2 in which the second edge, at least part of which is formed from the second rubber layer, serves as the trailing edge.

## Advantages of the invention

The present invention configured as described hereinabove provides a tire tread and a tire having said tread with which it is possible to exhibit higher performance on normal road surfaces when traveling in the second direction DR2 in which the second edge, at least part of which is formed from the second rubber layer, serves as the trailing edge, while exhibiting a high winter performance when traveling in the first direction DR1 in which the first edge, at least part of which is formed from the first rubber layer, serves as the trailing edge.

## Brief description of the drawings

[Figure 1] is a plan view illustrating schematically part of a tire tread according to a first embodiment of the present invention.
[Figure 2] is an enlarged cross-sectional view along the line II-II in Figure 1.
[Figure 3] is a plan view illustrating schematically part of a tire tread according to a second embodiment of the present invention.
[Figure 4] is an enlarged cross-sectional view along the line IV-IV in Figure 3.
[Figure 5] is a plan view illustrating schematically part of a tire tread according to a third embodiment of the present invention.
[Figure 6] is an enlarged cross-sectional view along the line VI-VI in Figure 5.

## Modes of embodying the invention

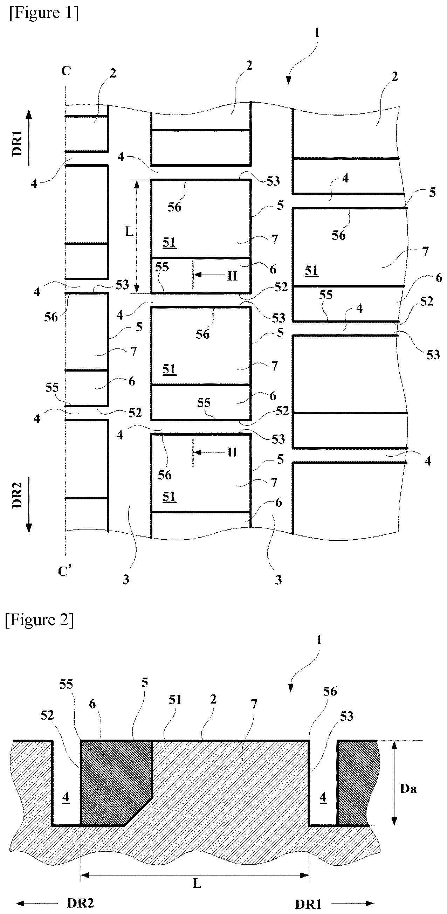

Tire treads and tires employing said treads, according to preferred embodiments of the present invention, will now be described with reference to the accompanying drawings.
The configuration of a tire tread according to a first embodiment of the present invention will first be described with reference to Figure 1 and Figure 2. It should be noted that 205/55R16 is one example of a tire size of a tire to which a tread 1 in the present embodiment is applicable.
Figure 1 is a plan view illustrating schematically part of a tire tread according to the first embodiment of the present invention, and Figure 2 is an enlarged cross-sectional view along line II-II in Figure 1.
In Figure 1 and Figure 2, the direction of the arrow indicated by DR1 is a first direction in the circumferential direction of the tire (direction of rotation), and the direction of the arrow indicated by DR2 is a second direction in the circumferential direction of the tire (direction of rotation) opposite to DR1.
As illustrated in Figure 1, the tread 1 has a ground-contacting surface 2 which comes into contact with the road surface when the tire is rolling. A plurality of circumferential grooves 3 which open in the ground-contacting surface 2 and extend in the circumferential direction of the tire, and a plurality of auxiliary grooves 4 which extend in a direction intersecting the circumferential grooves 3 are formed in the ground-contacting surface 2, and a plurality of blocks 5 are defined by the circumferential grooves 3 and the auxiliary grooves 4.
Each block 5 includes an upper surface 51 which is disposed in an outermost part in the radial direction of the tire and which forms part of the ground-contacting surface 2, and two front surfaces 52, 53 which are separated by a length L in the circumferential direction of the tire and each face different auxiliary grooves 4, wherein a first edge 55 serving as the trailing edge when the tread 1 is traveling in the first direction DR1, and a second edge 56 serving as the trailing edge when the tread 1 is traveling in the second direction DR2 opposite to the first direction DR1 are formed at intersecting portions of the upper surface 51 and the front surfaces 52, 53.
Each block 5 is composed of a first rubber layer 6 which is composed of a first rubber composition, constitutes the entire first edge 55, and is exposed in a region of at least 20% of the upper surface 51 toward the inside of the block 5 from the first edge 55, and a second rubber layer 7 which is composed of a second rubber composition different from the first rubber composition, overlaps the first rubber layer 6 in the circumferential direction of the tire, constitutes the entire second edge 56, and is exposed in the upper surface 51.
As illustrated in Figure 2, the first rubber layer 6 is also exposed in the entire front surface 52 which faces the auxiliary groove 4 having a depth Da and forms the first edge 55 at the intersecting portion with the upper surface 51, and the first rubber layer 6 is disposed with a pentagonal shape inside the block 5 in such a way as to occupy at least 20% and at most 80% of the volume of the block 5.
It should be noted that the depth Da of the auxiliary grooves 4 may be the same as or different from a depth Dc (not shown in the drawing) of the circumferential grooves 3.
The first rubber composition constituting the first rubber layer 6 has a glass transition temperature Tg at most equal to -20°C, and the second rubber composition constituting the second rubber layer 7 has a glass transition temperature Tg greater than -20°C.

Further, the dynamic shear complex modulus G* at 0°C and 0.34 MPa of the first rubber composition constituting the first rubber layer 6 is at most equal to 2.0 MPa, and the dynamic shear complex modulus G* at 0°C and 0.34 MPa of the second rubber composition constituting the second rubber layer 7 is at least equal to 2.5 MPa. Further, a difference between the dynamic shear complex modulus G* at 0°C and 0.34 MPa of the first rubber composition constituting the first rubber layer 6 and the dynamic shear complex modulus G* at 0°C and 0.34 MPa of the second rubber composition constituting the second rubber layer 7 is configured to be at least equal to 0.8 MPa.

It should be noted that the dynamic shear complex modulus G* at 0°C and 0.34 MPa of the first rubber composition forming the first rubber layer 6 is preferably at most equal to 1.8 MPa, and the difference between the dynamic shear complex modulus G* at 0°C and 0.34 MPa of the first rubber composition forming the first rubber layer 6 and the dynamic shear complex modulus G* at 0°C and 0.34 MPa of the second rubber composition forming the second rubber layer 7 is preferably at least equal to 1.0 MPa, and more preferably at least equal to 1.2 MPa.

The operational advantages of the tread in the present embodiment will now be described. In the tread 1 in the present embodiment, at least two edges are formed at intersecting portions between the upper surface 51 and the front surfaces 52, 53 of the block 5, namely the first edge 55 serving as the trailing edge when traveling in the first direction DR1, and the second edge 56 serving as the trailing edge when traveling in the second direction DR2 opposite to the first direction DR1, the block 5 is composed of at least two rubber layers that overlap in the circumferential direction of the tire, comprising the first rubber layer 6 which includes at least part of the first edge 55 and is composed of the first rubber composition, and the second rubber layer 7 which includes at least part of the second edge 56 and is composed of the second rubber composition different from the first rubber composition, and the first rubber layer 6 is exposed in a region of at least 20% of the upper surface 51 toward the inside of the block 5 from the first edge 55 and a region of at least 60% of the front surface 52 in a radially inward direction from the first edge 55, and therefore two different performances can be achieved simultaneously at a high level using one tire, by changing the direction of rotation of the tire.

Since the glass transition temperature Tg of the first rubber composition forming the first rubber layer 6 is at most equal to -20°C and the glass transition temperature Tg of the second rubber composition forming the second rubber layer 7 is greater than -20°C, the block deforms significantly as a result of forces during breaking, which is of particular importance with regard to safety while traveling, the trailing edge side performance becomes dominant and the leading edge side is barely in contact with the ground. Both winter performance and performance on normal road surfaces can thus be exhibited, since, with regard to winter performance when traveling in the first direction DR1 in which the first edge 55, at least part of which is formed from the first rubber layer 6, serves as the trailing edge, the first rubber composition having a glass transition temperature Tg at most equal to -20°C and constituting the first rubber layer 6 is capable of flexibly tracking winter road surfaces covered with snow or ice, and with regard to performance on normal road surfaces when traveling in the second direction DR2 in which the second edge 56, at least part of which is formed from the second rubber layer 7, serves as the trailing edge, the second rubber composition having a glass transition temperature Tg greater than -20°C and constituting the second rubber layer 7 is capable of accepting a large force from a normal road surface, and as a result winter performance and performance on normal road surfaces can be achieved simultaneously at a high level by changing the direction of rotation of the tire.

Further, since the dynamic shear complex modulus G* at 0°C and 0.34 MPa of the first rubber composition forming the first rubber layer 6 is at most equal to 2.0 MPa, and the dynamic shear complex modulus G* at 0°C and 0.34 MPa of the second rubber composition forming the second rubber layer 7 is at least equal to 2.5 MPa, when traveling in the first direction DR1 in which the first edge 55, at least part of which is formed from the first rubber layer 6, serves as the trailing edge, the first rubber composition constituting the first rubber layer 6 is capable of flexibly tracking winter road surfaces covered with snow or ice, and when traveling in the second direction DR2 in which the second edge 56, at least part of which is formed from the second rubber layer 7, serves as the trailing edge, the second rubber composition constituting the second rubber layer 7 is capable of accepting a large force from a normal road surface, and it is therefore possible to achieve simultaneously, more reliably and at a high level, both winter performance when traveling in the first direction DR1 in which the first edge 55, at least part of which is formed from the first rubber layer 6, serves as the trailing edge, and performance on normal road surfaces when traveling in the second direction DR2 in which the second edge 56, at least part of which is formed from the second rubber layer 7, serves as the trailing edge.

That is, if the dynamic shear complex modulus G* at 0°C and 0.34 MPa of the first rubber composition forming the first rubber layer 6 is greater than 2.0 MPa, it is difficult for the first rubber composition constituting the first rubber layer to flexibly track winter road surfaces covered with snow or ice, and there is a risk that an improvement in the performance on winter road surfaces may be difficult to achieve. Further, if the dynamic shear complex modulus G* at 0°C and 0.34 MPa of the second rubber composition forming the second rubber layer 7 is less than 2.5 MPa, it is difficult for the second rubber composition constituting the second rubber layer 7 to accept a large force from a normal road surface, and there is a risk that an improvement in the performance on normal road surfaces may be difficult to achieve.

Since the difference between the dynamic shear complex modulus G* at 0°C and 0.34 MPa of the first rubber composition forming the first rubber layer 6 and the dynamic shear complex modulus G* at 0°C and 0.34 MPa of the second rubber composition forming the second rubber layer 7 is at least equal to 0.8 MPa, winter performance exhibited when traveling in the first direction DR1 in which the first edge 55, at least part of which is formed from the first rubber layer 6, serves as the trailing edge, and performance on normal road surfaces exhibited when traveling in the second direction DR2 in which the second edge 56, at least part of which is formed from the second rubber layer 7, serves as the trailing edge can be achieved adequately, and it is therefore possible to achieve simultaneously, more reliably and at a high level, both winter performance when traveling in the first direction DR1 in which the first edge 55, at least part of which is formed from the first rubber layer 6, serves as the trailing edge, and performance on normal road surfaces when traveling in the second direction DR2 in which the second edge 56, at least part of which is formed from the second rubber layer 7, serves as the trailing edge.

That is, if the difference between the dynamic shear complex modulus G* at 0°C and 0.34 MPa of the first rubber composition forming the first rubber layer 6 and the dynamic shear complex modulus G* at 0°C and 0.34 MPa of the second rubber composition forming the second rubber layer 7 is less than 0.8 MPa, there is not a sufficient performance difference between winter performance exhibited when traveling in the first direction DR1 in which the first edge 55, at least part of which is formed from the first rubber layer 6, serves as the trailing edge, and performance on normal road surfaces exhibited when traveling in the second direction DR2 in which the second edge 56, at least part of which is formed from the second rubber layer 7, serves as the trailing edge, and there is a risk that it may be difficult for both performance on normal road surfaces and performance on winter road surfaces to be achieved simultaneously at a higher level.

Since the first rubber layer 6 is configured to constitute at least 80% of the first edge 55, the performance of the first rubber layer 6 can be exhibited adequately, and as a result winter performance when traveling in the first direction DR1 in which the first edge 55, at least part of which is formed from the first rubber layer 6, serves as the trailing edge, can be improved more reliably.

That is, if the first rubber layer constituting the first edge 55 is less than 80%, the performance of the first rubber layer 6 cannot be exhibited adequately, and there is a risk that it may be difficult to achieve an improvement in winter performance exhibited when traveling in the first direction DR1 in which the first edge 55, at least part of which is formed from the first rubber layer 6, serves as the trailing edge.

It should be noted that the first rubber layer 6 preferably constitutes at least 90% of the first edge 55, and the first rubber layer 6 more preferably constitutes the entire first edge 55.

Since the first rubber layer 6 is exposed in a region of up to 75% of the upper surface 51 of the block 5 from the first edge 55, exposure of the second rubber layer 7 in the upper surface 51 of the block 5 can be adequately ensured, allowing the performance on normal road surfaces to be improved reliably, and as a result it is possible to achieve simultaneously, more reliably and at a high level, both winter performance when traveling in the first direction DR1 in which the first edge 55, at least part of which is formed from the first rubber layer 6, serves as the trailing edge, and performance on normal road surfaces when traveling in the second direction DR2 in which the second edge 56, at least part of which is formed from the second rubber layer 7, serves as the trailing edge.

That is, if the first rubber layer 6 is exposed in the upper surface 51 of the block 5 in a region thereof exceeding 75% of the length L from the first edge 55, then since the relative amount of the second rubber layer 7 exposed in the upper surface 51 of the block 5 is reduced, there is a risk that it may be difficult to improve the performance on normal road surfaces.

It should be noted that the exposure of the first rubber layer 6 in the upper surface 51 of the block 5 preferably occurs in a region of up to 70% from the first edge 55, and more preferably in a region of up to 60% from the first edge 55.

Since the first rubber layer 6 is exposed in the entire front surface 52 forming the first edge 55 of the block 5, winter performance when traveling in the first direction DR1 in which the first edge 55, at least part of which is formed from the first rubber layer 6, serves as the trailing edge, can be improved more reliably.

Since the first rubber layer 6 occupies at least 20% and at most 80% of the volume of the block 5, the first rubber layer 6 is capable of allowing the block 5 to deform sufficiently for the performance thereof to be exhibited, and the second rubber layer 7 is capable of accepting a large force from a normal road surface, and it is therefore possible to achieve simultaneously, more reliably and at a high level, both winter performance when traveling in the first direction DR1 in which the first edge 55, at least part of which is formed from the first rubber layer 6, serves as the trailing edge, and performance on normal road surfaces when traveling in the second direction DR2 in which the second edge 56, at least part of which is formed from the second rubber layer 7, serves as the trailing edge.

That is, if the volume of the block 5 occupied by the first rubber layer 6 is less than 20%, it is difficult for the first rubber layer 6 to allow the block 5 to deform sufficiently for the performance thereof to be exhibited, and there is a risk that an improvement in the performance on winter road surfaces may be difficult to achieve. Meanwhile, if the volume of the block 5 occupied by the first rubber layer 6 is greater than 80%, it is difficult for the second rubber layer 7 to accept a large force from a normal road surface, and there is a risk that an improvement in the performance on normal road surfaces may be difficult to achieve.

It should be noted that the volume of the block occupied by the first rubber layer 6 is more preferably at least equal to 25% and at most equal to 75%, and yet more preferably at least equal to 30% and at most equal to 70%.

A modified example of the present embodiment will now be described.

In the embodiment described hereinabove, the shape of the block 5 in a plan view is rectangular, but the shape may be trapezoidal, rhombic or elliptical, for example.

Further, a chamfered portion may be provided in the intersecting portion of the upper surface 51 and the front surfaces 52, 53. In such a case, the chamfered portion is regarded as part of the upper surface 51, and the first edge 55 and the second edge 56 are intersecting portions of the chamfered portion and the front surfaces 52, 53.

Further, in the embodiment described hereinabove, the shape of the first rubber layer 6 in a cross-sectional view is pentagonal, but the shape may be triangular, rectangular, or a shape including an arc, for example.

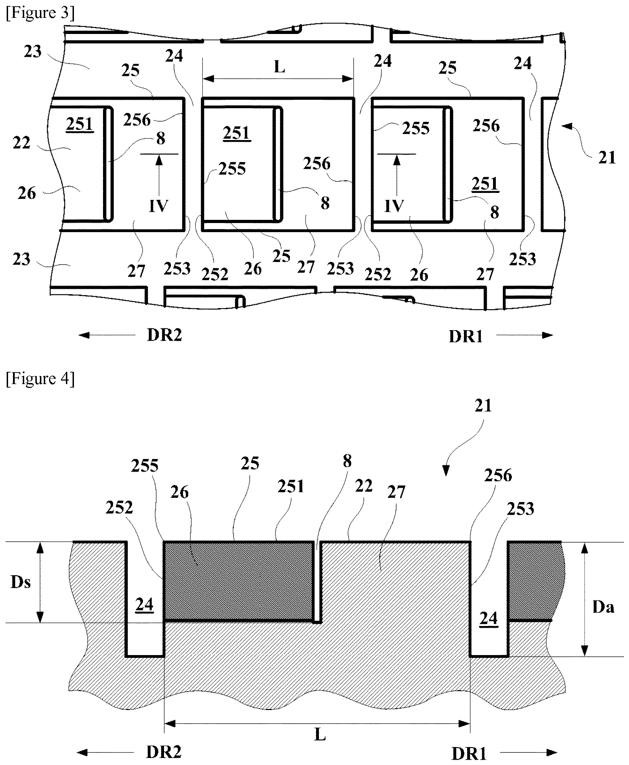

A tire tread according to a second embodiment of the present invention will next be described with reference to Figure 3 and Figure 4.

Figure 3 is a plan view illustrating schematically part of a tire tread according to the second embodiment of the present invention, and Figure 4 is an enlarged cross-sectional view along line IV-IV in Figure 3.

In the same way as in Figure 1 and Figure 2, in Figure 3 and Figure 4 the direction of the arrow indicated by DR1 is the first direction in the circumferential direction of the tire (direction of rotation), and the direction of the arrow indicated by DR2 is the second direction in the circumferential direction of the tire (direction of rotation) opposite to DR1. It should be noted that in the second embodiment, mainly only parts that differ from the tread in the first embodiment discussed hereinabove will be described, and descriptions of configurations that are the same will be omitted.

As illustrated in Figure 3, in a tread 21 in the second embodiment, an incision 8 is formed opening in an upper surface 251 of a block 25, extending in a direction (substantially parallel to an auxiliary groove 24) intersecting a circumferential groove 23, and not opening in the circumferential groove 23, and a first rubber layer 26 has substantially the same width as an axial direction width of the incision 8, constitutes at least 80% of a first edge 255 which is formed at an intersecting portion of the upper surface 251 and a front surface 252 facing the auxiliary groove 24 and which serves as a trailing edge when traveling in the first direction DR1, and is exposed in the upper surface 251 between the first edge 255 and the incision 8 in such a way as to be exposed in a region of at least 20% of the upper surface 251 toward the inside of the block 25 from the first edge 255. A second rubber layer 27 includes at least part of a second edge 256, which is formed at an intersecting portion of the upper surface 251 and a front surface 253 separated by a length L from the front surface 252 in the circumferential direction and facing another auxiliary groove 24, and which serves as the trailing edge when traveling in the second direction DR2, and the second rubber layer 27 is exposed in a region of the upper surface 251 excluding the region of the upper surface 251 in which the first rubber layer 26 is exposed.

In the same way as in the first embodiment, the first rubber layer 26 is composed of a first rubber composition having a glass transition temperature Tg at most equal to -20°C, and the second rubber layer 27 is composed of a second rubber composition different from the first rubber composition and having a glass transition temperature Tg greater than -20°C. The dynamic shear complex modulus G* at 0°C and 0.34 MPa of the first rubber composition is at most equal to 2.0 MPa, the dynamic shear complex modulus G* at 0°C and 0.34 MPa of the second rubber composition is at least equal to 2.5 MPa, and the difference between the dynamic shear complex modulus G* at 0°C and 0.34 MPa of the first rubber composition and the dynamic shear complex modulus G* at 0°C and 0.34 MPa of the second rubber composition is at least equal to 0.8 MPa.

As illustrated in Figure 4, the incision 8 has a depth Ds that is shallower than the depth Da of the auxiliary grooves, and the first rubber layer 26 is formed with a substantially rectangular shape to substantially the same depth as the depth Ds of the incision 8, in such a way as to occupy at least 20% and at most 80% of the volume of the block 25 and to be exposed in a region of at least 60% of the front surface 252 in a radially inward direction from the first edge 255.

The operational advantages of the tread in the present embodiment will now be described. With the tread 21 in the present embodiment, since the block 25 has at least one incision 8 opening in the upper surface 251, it is easy to optimize the rigidity of the block 25 by means of the thin incision 8, and it is consequently possible to reliably adjust block 25 collapse required to exhibit winter performance when traveling in the first direction DR1 in which the first edge 255, at least part of which is formed from the first rubber layer 26, serves as the trailing edge, and the block 25 rigidity required to accept a large force from a normal road surface when traveling in the second direction DR2 in which the second edge 256, at least part of which is formed from the second rubber layer 27, serves as the trailing edge, and it is therefore possible to achieve simultaneously, more reliably and at a high level, both winter performance when traveling in the first direction DR1 in which the first edge 255, at least part of which is formed from the first rubber layer 26, serves as the trailing edge, and performance on normal road surfaces when traveling in the second direction DR2 in which the second edge 256, at least part of which is formed from the second rubber layer 27, serves as the trailing edge.

A modified example of the present embodiment will now be described.

In the embodiment described hereinabove, the incision 8 opens as a straight line in the upper surface 251, but the shape may be arcuate, zig-zag shaped, or a combination of straight lines and zig-zag lines, for example.

Further, the incision 8 extends in a straight line in the depth direction of the block 25, but the shape may be arcuate, zig-zag shaped, or a combination of straight lines and zig-zag lines, for example. Further, the width of the incision 8 may vary, the depth Ds of the incision 8 may be equivalent to or deeper than the depth Da of the auxiliary grooves 24, the incision 8 may open into the circumferential grooves 23 at one or both sides thereof, and a widened portion may be provided in a radially inner side end portion of the incision 8.

Further, in the embodiment described hereinabove, the first rubber layer 26 and the second rubber layer 27 are arranged overlapping in the circumferential direction as though the upper surface 251 is divided into two by the incision 8, but the incision 8 may be treated as an auxiliary groove, with the first rubber layer 26 and the second rubber layer 27 disposed overlapping in the circumferential direction between the first edge 255 (front surface 252) and the incision 8, and with the first rubber layer 26 and the second rubber layer 27 disposed overlapping in the circumferential direction between the incision 8 and the second edge 256 (front surface 253).

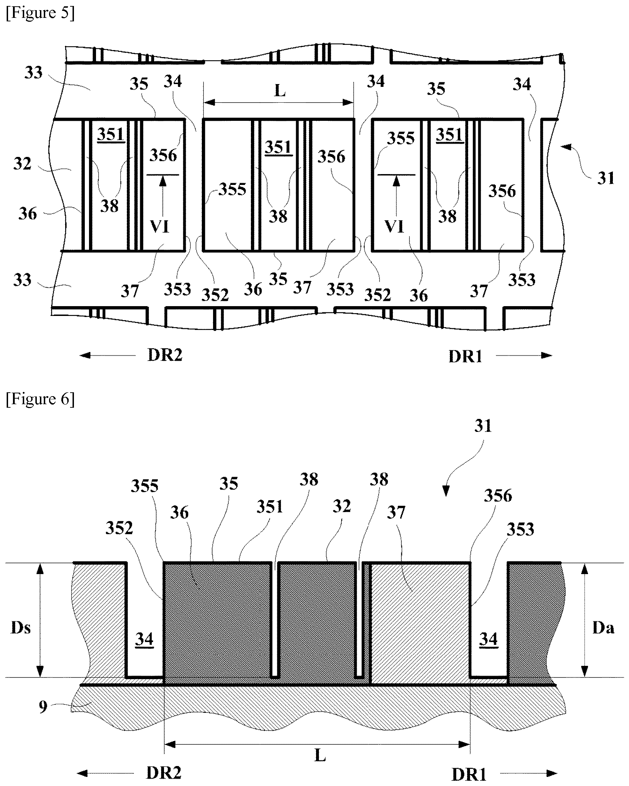

A tire tread according to a third embodiment of the present invention will next be described with reference to Figure 5 and Figure 6.

Figure 5 is a plan view illustrating schematically part of a tire tread according to the third embodiment of the present invention, and Figure 6 is an enlarged cross-sectional view along line VI-VI in Figure 5.

In the same way as in Figure 1 to Figure 4, in Figure 5 and Figure 6 the direction of the arrow indicated by DR1 is the first direction in the circumferential direction of the tire (direction of rotation), and the direction of the arrow indicated by DR2 is the second direction in the circumferential direction of the tire (direction of rotation) opposite to DR1. It should be noted that in the third embodiment, mainly only parts that differ from the tread in the first embodiment and the second embodiment discussed hereinabove will be described, and descriptions of configurations that are the same will be omitted.

As illustrated in Figure 5, in a tread 31 in the third embodiment, two incisions 38 are formed opening in an upper surface 351 of a block 35, extending in a direction (substantially parallel to an auxiliary groove 34) intersecting circumferential grooves 33, and opening in the circumferential grooves 33, and a first rubber layer 36 constitutes an entire first edge 355, which is formed at an intersecting portion of the upper surface 351 and a front surface 352 facing the auxiliary groove 34 in such a way as to contain the two incisions 38, and which serves as a trailing edge when traveling in the first direction DR1, and is exposed in the upper surface 351 in such a way as to be exposed in a region of at least 20% and up to 75% of the upper surface 351 toward the inside of the block 35 from the first edge 355. A second rubber layer 37 includes at least part of a second edge 356, which is formed at an intersecting portion of the upper surface 351 and a front surface 353 separated by a length L from the front surface 352 in the circumferential direction and facing another auxiliary groove 34, and which serves as the trailing edge when traveling in the second direction DR2, and the second rubber layer 37 is exposed in a region of the upper surface 351 excluding the region of the upper surface 351 in which the first rubber layer 36 is exposed.

In the same way as in the first embodiment and the second embodiment, the first rubber layer 36 is composed of a first rubber composition having a glass transition temperature Tg at most equal to -20°C, and the second rubber layer 37 is composed of a second rubber composition different from the first rubber composition and having a glass transition temperature Tg greater than -20°C. The dynamic shear complex modulus G* at 0°C and 0.34 MPa of the first rubber composition is at most equal to 2.0 MPa, the dynamic shear complex modulus G* at 0°C and 0.34 MPa of the second rubber composition is at least equal to 2.5 MPa, and the difference between the dynamic shear complex modulus G* at 0°C and 0.34 MPa of the first rubber composition and the dynamic shear complex modulus G* at 0°C and 0.34 MPa of the second rubber composition is at least equal to 0.8 MPa.

As illustrated in Figure 6, the two incisions 38 have a depth Ds that is substantially equal to the depth Da of the auxiliary grooves, the first rubber layer 36 and the second rubber layer 37 are formed as far as a part of the tread 31 further to the radially inner side than the depths Da, Ds, and an under-tread 9 formed from another rubber composition that is different from both the first rubber composition constituting the first rubber layer 36 and the second rubber composition constituting the second rubber layer 37 is provided further to the radially inner side than the first rubber layer 36 and the second rubber layer 37.

The operational advantages of the tread in the present embodiment will now be described. With the tread 31 in the present embodiment, since the first rubber layer 36 is provided in such a way as to contain the two incisions 38, it is easy to optimize the rigidity of the block 35 by means of the thin incisions 38, and it is consequently possible to reliably adjust block 35 collapse required to exhibit winter performance when traveling in the first direction DR1 in which the first edge 355, at least part of which is formed from the first rubber layer 36, serves as the trailing edge, and the block 35 rigidity required to accept a large force from a normal road surface when traveling in the second direction DR2 in which the second edge 356, at least part of which is formed from the second rubber layer 37, serves as the trailing edge, and it is therefore possible to achieve simultaneously, more reliably and at a high level, both winter performance when traveling in the first direction DR1 in which the first edge 355, at least part of which is formed from the first rubber layer 36, serves as the trailing edge, and performance on normal road surfaces when traveling in the second direction DR2 in which the second edge 356, at least part of which is formed from the second rubber layer 37, serves as the trailing edge.

In addition, in the present embodiment, since the under-tread 9 formed from another rubber composition that is different from both the first rubber composition constituting the first rubber layer 36 and the second rubber composition constituting the second rubber layer 37 is provided further to the radially inner side than the first rubber layer 36 and the second rubber layer 37, other performances such as rolling resistance performance can be improved as a result of the under-tread 9 while improving winter performance when traveling in the first direction DR1 in which the first edge 355, at least part of which is formed from the first rubber layer 36, serves as the trailing edge, and the performance on normal road surfaces when traveling in the second direction DR2 in which the second edge 356, at least part of which is formed from the second rubber layer 37, serves as the trailing edge, and it is therefore possible to achieve simultaneously, more reliably and at a high level, both winter performance when traveling in the first direction DR1 in which the first edge 355, at least part of which is formed from the first rubber layer 36, serves as the trailing edge, and performance on normal road surfaces when traveling in the second direction DR2 in which the second edge 356, at least part of which is formed from the second rubber layer 37, serves as the trailing edge.

Preferred embodiments of the present invention have been described hereinabove, but various modifications and variations may be made to the present invention within the scope recited in the scope of the patent claims, without limitation to the illustrated embodiments.

**Exemplary embodiments**

In order to clarify the advantages of the present invention, verification test results obtained using a test piece imitating a block of a tire tread according to an exemplary embodiment of the present invention will next be described.

Test pieces (corresponding to a block) having a length of 26 mm (corresponding to the length L), a width of 25 mm and a height of 9 mm (corresponding to the depth Da of the auxiliary grooves) were prepared to imitate the first embodiment (exemplary embodiment 1) and the second embodiment (exemplary embodiment 2) discussed hereinabove. The glass transition temperature Tg of the first rubber composition constituting the first rubber layer was set to - 40°C, the dynamic shear complex modulus G* thereof at 0°C and 0.34 MPa was set to 1 MPa, the glass transition temperature Tg of the second rubber composition constituting the second rubber layer was set to 0°C, and the dynamic shear complex modulus G* thereof at 0°C and 0.34 MPa was set to 15 MPa. Further, a test piece (comparative example 1) corresponding to the block in the first embodiment, with the proportion of the first rubber composition constituting the first rubber layer set to 10% of the volume of the block, and a test piece (comparative example 2) corresponding to the block in the second embodiment, with the proportion of the first rubber composition constituting the first rubber layer set to 10% of the volume of the block, were prepared as comparative examples, and furthermore on-ice performance tests and wet performance tests were performed using, as conventional examples, a test piece (conventional example 1) corresponding to the block in the first embodiment, with the entire block (including the first rubber layer and the second rubber layer) composed of the same first rubber composition, a test piece (conventional example 2) corresponding to the block in the first embodiment, with the entire block composed of the same second rubber composition, a test piece (conventional example 3) corresponding to the block in the second embodiment, with the entire block composed of the same first rubber composition, and a test piece (conventional example 4) corresponding to the block in the first embodiment, with the entire block composed of the same second rubber composition.

Test procedure (performance on ice):

The test piece was arranged on an icy road surface, a load (for example 3 kg/cm$^2$) was applied, the test piece was caused to slide in the second direction DR2 (the direction in which a braking force is generated when the tread rolls in the first direction DR1) at a prescribed speed (for example, 5 km/h), a force (Fx) generated in the direction of travel of the test piece, and a force (Fz) generated perpendicular to the direction of travel were measured, and the coefficient of friction of the test piece on ice was obtained from Fx/Fz. The temperature of the icy road surface during measurement was set to -10°C. Measurement results are shown in Table 1 and Table 2. In Table 1 and Table 2, each measured value is represented as an index, with the conventional example being 100, and with larger numerical values being more satisfactory.

Test procedure (wet performance):

The test piece was arranged on a BBTM type asphalt concrete road surface core conforming to the specification NF P 98-137, on which water at a temperature of 25°C had been spread in such a way as to achieve a water depth of 1 mm, a load (for example 3 kg/cm$^2$) was applied, the test piece was caused to accelerate and slide in the first direction DR1 (the direction in which a braking force is generated when the tread rolls in the second direction DR2) with an acceleration of 100 m/s$^2$ until a speed of 5 m/s was reached, a slip ratio of the test piece relative to the road surface was varied from 0 to 50%, and the maximum value of the coefficient of friction detected at this time was read. Measurement results are shown in Table 3 and Table 4. In Table 3 and Table 4, each measured value is represented as an index, with the conventional example being 100, and with larger numerical values being more satisfactory.

[table 1]

|  | Conventional example 2 | Comparative example 1 | Exemplary embodiment 1 |
|---|---|---|---|
| Coefficient of friction on ice (index) | 100 | 102 | 168 |

[Table 2]

|  | Conventional example 4 | Comparative example 2 | Exemplary embodiment 2 |
|---|---|---|---|
| Coefficient of friction on ice (index) | 100 | 102 | 165 |

[Table 3]

|  | Conventional example 1 | Exemplary embodiment 1 |
|---|---|---|
| Coefficient of friction in wet (index) | 100 | 116 |

[Table 4]

|  | Conventional example 3 | Exemplary embodiment 2 |
|---|---|---|
| Coefficient of friction in wet (index) | 100 | 118 |

As shown in Table 1 to Table 4, when the tire tread in the exemplary embodiments was employed, it was possible to confirm that both winter performance when traveling in the first direction DR1 in which the first edge, at least part of which is formed from the first rubber layer, serves as the trailing edge, and performance on normal road surfaces when traveling in the second direction DR2 in which the second edge, at least part of which is formed from the second rubber layer, serves as the trailing edge, can be improved effectively, and it was possible to confirm that winter performance when traveling in the first direction DR1 can be improved more effectively by setting the first rubber layer to at least 20% of the volume of the block.

**Explanation of the reference numbers**

1, 21, 31: tread
2, 22, 32: ground-contacting surface
3, 23, 33: circumferential groove (main groove)
4, 24, 34: auxiliary groove
5, 25, 35: block
51, 251, 351: upper surface
52, 252, 352, 53, 253, 353: front surface
55, 255, 355: first edge
56, 256, 356: second edge
6, 26, 36: first rubber layer
7, 27, 37: second rubber layer
8, 38: incision
9: under-tread

**Claims**

1.   A tire tread (1) including a ground-contacting surface (2) which comes into contact with a road surface during rolling, at least one circumferential groove (3) which has a depth Dc and extends in a circumferential direction of a tire, a plurality of auxiliary grooves (4) which have a depth Da and extend in a direction intersecting the circumferential groove (3), and a plurality of blocks (5) defined by the circumferential groove (3) and the auxiliary grooves (4), wherein each block (5) includes an upper surface (51) forming part of the ground-contacting surface (2), and at least two front surfaces (52, 53) which are separated by a length L in the circumferential direction of the tire and each face different auxiliary grooves (4), and the upper surface (51) forms at least two edges at intersecting portions with the front surfaces (52, 53), namely a first edge (55) serving as a trailing edge when traveling in a first direction DR1, and a second edge (56) serving as the trailing edge when traveling in a second direction DR2 opposite to the first direction DR1, wherein

each block (5) is composed of at least two rubber layers that overlap in the circumferential direction of the tire, wherein the at least two rubber layers comprise a first rubber layer (6) which includes at least part of the first edge (55) and is composed of a first rubber composition, and a second rubber layer (7) which includes at least part of the second edge (56) and is composed of a second rubber composition different from the first rubber composition, wherein the first rubber layer (6) is exposed in a region of at least 20% of the upper surface (51) toward the inside of the block (5) from the first edge (55), and a region of at least 60% of the front surface (52) in a radially inward direction from the first edge (55), and wherein

the first rubber layer (6) occupies at least 20% and at most 80% of the volume of the block (5), the tire tread being **characterized in that**

a glass transition temperature Tg of the first rubber composition forming the first rubber layer (6) is at most equal to -20°C, and the glass transition temperature Tg of the second rubber composition forming the second rubber layer (7) is greater than -20°C.

2. The tire tread as claimed in claim 1, wherein a dynamic shear complex modulus G* at 0°C and 0.34 MPa of the first rubber composition forming the first rubber layer (6) is at most equal to 2.0 MPa, and the dynamic shear complex modulus G* at 0°C and 0.34 MPa of the second rubber composition forming the second rubber layer (7) is at least equal to 2.5 MPa.

3. The tire tread as claimed in claim 1 or claim 2, wherein a difference between the dynamic shear complex modulus G* at 0°C and 0.34 MPa of the first rubber composition forming the first rubber layer (6) and the dynamic shear complex modulus G* at 0°C and 0.34 MPa of the second rubber composition forming the second rubber layer (7) is at least equal to 0.8 MPa.

4. The tire tread as claimed in any one of claims 1 to 3, wherein the first rubber layer (6) constitutes at least 80% of the first edge (55).

5. The tire tread as claimed in claim 4, wherein the first rubber layer (6) constitutes the entire first edge (55).

6. The tire tread as claimed in any one of claims 1 to 5, wherein the first rubber layer (6) is exposed in a region of up to 75% of the upper surface (51) of the block (5) from the first edge (55).

7. The tire tread as claimed in any one of claims 1 to 6, wherein the first rubber layer (6) is exposed in the entire front surface (52) forming the first edge (55) of the block (5).

8. The tire tread as claimed in any one of claims 1 to 7, wherein the block (5) has at least one incision (8) opening at least in the upper surface (51).

9. A tire having the tire tread as claimed in any one of claims 1 to 8.

**Patentansprüche**

1. Reifenlauffläche (1), die eine Bodenkontaktfläche (2), die während des Rollens mit einer Straßenfläche in Kontakt kommt, mindestens eine umfangsrille (3), die eine Tiefe Dc aufweist und sich in eine Umfangsrichtung des Reifens erstreckt, eine Vielzahl von Hilfsrillen (4), die eine Tiefe Da aufweisen und sich in eine Richtung erstrecken, die die Umfangsrille (3) schneidet, und eine Vielzahl von Blöcken (5), die durch die Umfangsrille (3) und die Hilfsrillen (4) definiert werden, beinhaltet, wobei

jeder Block (5) eine obere Fläche (51), die einen Teil der Bodenkontaktfläche (2) bildet, und mindestens zwei vordere Flächen (52, 53), die durch eine Länge L in der Umfangsrichtung des Reifens getrennt sind und jeweils anderen Hilfsrillen (4) zugewandt sind, beinhaltet und die obere Fläche (51) mindestens zwei Kanten an sich mit den vorderen Flächen (52, 53) schneidenden Abschnitten bildet, nämlich eine erste Kante (55), die beim Fahren in eine erste Richtung DR1 als eine Hinterkante dient, und eine zweite Kante (56), die beim Fahren in eine zweite Richtung DR2, die der ersten Richtung DR1 entgegengesetzt ist, als die Hinterkante dient, wobei

jeder Block (5) aus mindestens zwei Gummischichten zusammengesetzt ist, die sich in der Umfangsrichtung des Reifens überlappen, wobei die mindestens zwei Gummischichten eine erste Gummischicht (6), die mindestens einen Teil der ersten Kante (55) beinhaltet und aus einer ersten Gummizusammensetzung zusammengesetzt ist, und eine zweite Gummischicht (7), die mindestens einen Teil der zweiten Kante (56) beinhaltet und aus einer zweiten Gummizusammensetzung, die sich von der ersten Gummizusammensetzung unterscheidet, zusammengesetzt ist, umfassen, wobei

die erste Gummischicht (6) in einer Region von mindestens 20 % der oberen Fläche (51) von der ersten Kante (55) zur Innenseite des Blocks (5) und einer Region von mindestens 60 % der vorderen Fläche (52) von der ersten Kante (55) in einer radialen Einwärtsrichtung freiliegt und wobei

die erste Gummischicht (6) mindestens 20 % und höchstens 80 % des Volumens des Blocks (5) belegt, wobei die Reifenlauffläche **dadurch gekennzeichnet ist, dass**

eine Glasübergangstemperatur Tg der ersten Gummizusammensetzung, die die erste Gummischicht (6) bildet, höchstens gleich -20 °C beträgt und die Glasübergangstemperatur Tg der zweiten Gummizusammensetzung, die die zweite Gummischicht (7) bildet, mehr als -20 °C beträgt.

**2.** Reifenlauffläche nach Anspruch 1, wobei ein dynamisches komplexes Schermodul G* bei 0 °C und 0,34 MPa der ersten Gummizusammensetzung, die die erste Gummischicht (6) bildet, höchstens gleich 2,0 MPa beträgt und das dynamische komplexe Schermodul G* bei 0 °C und 0,34 MPa der zweiten Gummizusammensetzung, die die zweite Gummischicht (7) bildet, mindestens gleich 2,5 MPa beträgt.

**3.** Reifenlauffläche nach Anspruch 1 oder Anspruch 2, wobei ein Unterschied zwischen dem dynamischen komplexen Schermodul G* bei 0 °C und 0,34 MPa der ersten Gummizusammensetzung, die die erste Gummischicht (6) bildet, und dem dynamischen komplexen Schermodul G* bei 0 °C und 0,34 MPa der zweiten Gummizusammensetzung, die die zweite Gummischicht (7) bildet, mindestens gleich 0,8 MPa beträgt.

**4.** Reifenlauffläche nach einem der Ansprüche 1 bis 3, wobei die erste Gummischicht (6) mindestens 80 % der ersten Kante (55) darstellt.

**5.** Reifenlauffläche nach Anspruch 4, wobei die erste Gummischicht (6) die gesamte erste Kante (55) darstellt.

**6.** Reifenlauffläche nach einem der Ansprüche 1 bis 5, wobei die erste Gummischicht (6) in einer Region von bis zu 75 % der oberen Fläche (51) des Blocks (5) von der ersten Kante (55) freiliegt.

**7.** Reifenlauffläche nach einem der Ansprüche 1 bis 6, wobei die erste Gummischicht (6) auf der gesamten vorderen Fläche (52), die die erste Kante (55) des Blocks (5) bildet, freiliegt.

**8.** Reifenlauffläche nach einem der Ansprüche 1 bis 7, wobei der Block (5) mindestens einen Einschnitt (8) aufweist, der sich mindestens in der oberen Fläche (51) öffnet.

**9.** Reifen, der die Reifenlauffläche nach einem der Ansprüche 1 bis 8 umfasst.

**Revendications**

**1.** Bande de roulement de pneu (1) comprenant une surface de contact avec le sol (2) qui vient en contact avec une surface de route pendant le roulement, au moins une rainure circonférentielle (3) qui a une profondeur Dc et s'étend dans une direction circonférentielle d'un pneu, une pluralité de rainures auxiliaires (4) qui ont une profondeur Da et s'étendent dans une direction coupant la rainure circonférentielle (3), et une pluralité de blocs (5) définis par la rainure circonférentielle (3) et les rainures auxiliaires (4), dans laquelle :
chaque bloc (5) comprend une surface supérieure (51) faisant partie de la surface de contact avec le sol (2), et au moins deux surfaces avant (52, 53) qui sont séparées par une longueur L dans la direction circonférentielle du pneu et chacune fait face à des rainures auxiliaires (4) différentes, et la surface supérieure (51) forme au moins deux bords au niveau de parties d'intersection avec les surfaces avant (52, 53), à savoir un premier bord (55) servant de bord de fuite lors du déplacement dans une première direction DR1, et un second bord (56) servant de bord de fuite lors du déplacement dans une seconde direction DR2 opposée à la première direction DR1, dans laquelle :
chaque bloc (5) est composé d'au moins deux couches de caoutchouc qui se chevauchent dans la direction circonférentielle du pneu, dans laquelle les au moins deux couches de caoutchouc comprennent une première couche de caoutchouc (6) qui comprend au moins une partie du premier bord (55) et est composée d'une première composition de caoutchouc et une seconde couche de caoutchouc (7) qui comprend au moins une partie du second bord (56) et est composée d'une seconde composition de caoutchouc différente de la première composition de caoutchouc, dans laquelle :
la première couche de caoutchouc (6) est exposée dans une région d'au moins 20 % de la surface supérieure (51) vers l'intérieur du bloc (5) à partir du premier bord (55), et une région d'au moins 60 % de la surface avant (52) dans une direction radialement vers l'intérieur à partir du premier bord (55), et dans laquelle :
la première couche de caoutchouc (6) occupe au moins 20 % et au maximum 80 % du volume du bloc (5), la bande de roulement de pneu étant **caractérisée en ce que** :
une température de transition vitreuse Tg de la première composition de caoutchouc formant la première couche de caoutchouc (6) est égale au maximum à -20°C, et la température de transition vitreuse Tg de la seconde composition de caoutchouc formant la seconde couche de caoutchouc (7) est supérieure à -20°C.

**2.** Bande de roulement de pneu selon la revendication 1, dans laquelle un module complexe de cisaillement dynamique G* à 0°C et 0,34 MPa de la première composition de caoutchouc formant la première couche de caoutchouc (6) est au maximum égal à 2,0 MPa et le module complexe de cisaillement dynamique G* à 0°C et 0,34 MPa de la seconde composition de caoutchouc formant la seconde couche de caoutchouc (7) est au moins égal à 2,5 MPa.

**3.** Bande de roulement de pneu selon la revendication 1 ou la revendication 2, dans laquelle une différence entre le module complexe de cisaillement dynamique G* à 0°C et 0,34 MPa de la première composition de caoutchouc formant la première couche de caoutchouc (6) et le module complexe de cisaillement dynamique G* à 0°C et 0,34 MPa de la seconde composition de caoutchouc formant la seconde couche de caoutchouc (7) est au moins égale à 0,8 MPa.

**4.** Bande de roulement de pneu selon l'une quelconque des revendications 1 à 3, dans laquelle la première couche de caoutchouc (6) constitue au moins 80 % du premier bord (55).

**5.** Bande de roulement de pneu selon la revendication 4, dans laquelle la première couche de caoutchouc (6) constitue tout le premier bord (55).

**6.** Bande de roulement de pneu selon l'une quelconque des revendications 1 à 5, dans laquelle la première couche de caoutchouc (6) est exposée dans une région allant jusqu'à 75 % de la surface supérieure (51) du bloc (5) à partir du premier bord (55).

**7.** Bande de roulement de pneu selon l'une quelconque des revendications 1 à 6, dans laquelle la première couche de caoutchouc (6) est exposée dans toute la surface avant (52) formant le premier bord (55) du bloc (5).

**8.** Bande de roulement de pneu selon l'une quelconque des revendications 1 à 7, dans laquelle le bloc (5) a au moins une incision (8) s'ouvrant au moins dans la surface supérieure (51).

**9.** Pneu ayant la bande de roulement de pneu selon l'une quelconque des revendications 1 à 8.

[Figure 1]

[Figure 2]

[Figure 3]

[Figure 4]

[Figure 5]

[Figure 6]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007283813 A
- JP H1178428 A
- JP 2012040937 A
- JP 2013203077 A
- JP 2013091480 A
- WO 2014099471 A
- JP 11078428 A